# EUROPÄISCHE PATENTSCHRIFT

(11) **EP 2 500 296 B1**
(45) Veröffentlichungstag und Bekanntmachung des Hinweises auf die Patenterteilung: **03.02.2016**
(21) Anmeldenummer: 12154245.0
(22) Anmeldetag: 07.02.2012
(51) Int. Cl.: B65G 47/08

(54) **Vorrichtung und Verfahren zum Gruppieren von Stückgut**
Device and method for grouping bulk material
Dispositif et procédé destinés au groupement de produits en vrac

(30) Priorität: 18.03.2011 DE 102011014495
(43) Veröffentlichungstag der Anmeldung: 19.09.2012
(73) Patentinhaber: Krones AG, 93073 Neutraubling (DE)
(72) Erfinder: Perl, Kurt, 93073 Neutraubling (DE); Seger, Martin, 93073 Neutraubling (DE); Heigl, Stefan, 93073 Neutraubling (DE); Hüttner, Johann, 93073 Neutraubling (DE); Reichenbecher, Dietrich, 93073 Neutraubling (DE)
(74) Vertreter: Benninger, Johannes

(56) Entgegenhaltungen:
- EP-A1- 1 123 886
- EP-A1- 2 141 019
- EP-A2- 1 767 474
- DE-A1-102008 040 204
- DE-A1-102009 029 314
- NL-A- 285 061
- US-A- 6 092 801

## Beschreibung

Die vorliegende Erfindung betrifft eine Vorrichtung zum Gruppieren von Stückgut mit den Merkmalen des unabhängigen Anspruchs 1. Die Erfindung betrifft weiterhin ein entsprechendes Verfahren zum Gruppieren von Stückgut mit den Merkmalen des unabhängigen Verfahrensanspruchs 9.

Für die Verarbeitung, Zusammenstellung, Gruppierung und Verpackung von Artikeln wie bspw. Getränkebehältern gibt es die unterschiedlichsten Verpackungsarten. Viele dieser Verpackungsarten erfordern das Gruppieren der Artikel während ihrer Beförderung, um sie mit der gewünschten Verpackungsart versehen zu können. Vorrichtungen zum Gruppieren von Stückgut, sog. Gruppiervorrichtungen, werden meist in Produktionsanlagen bei der Massenproduktion von Stückgütern wie Getränkebehältern, Flaschen o. dgl. eingesetzt. Die Stückgüter befinden sich beim Transport zwischen den Behandlungs- oder Handhabungsmaschinen in einem mehr oder weniger geschlossenen Produktstrom. Dieser Produktstrom muss je nach Kapazität und Aufbau der Behandlungsmaschine in unterschiedliche Teilgruppen eingeteilt werden. Eine solche Einteilung ist unter anderem auch in der Lebensmittelindustrie, insbesondere in der Getränkeindustrie, notwendig. Dort wird unter anderem der Produktstrom von Getränkebehältern, wie z.B. Flaschen oder Dosen, vor einer Verpackungsmaschine in sinnvolle Einheiten gruppiert, um verkaufsgerechte Verpackungseinheiten zu bilden. Wenn im vorliegenden Zusammenhang von einer Gruppierung die Rede ist, so ist damit in aller Regel das Herstellen von Lücken in einem ununterbrochenen Produktstrom gemeint. Nach der Gruppierung läuft der Produktstrom zwar unverändert weiter, doch sind die einzelnen Artikel oder Stückgüter in mehrere Gruppen von jeweils zwei, vier, sechs oder auch mehr nahe beieinander befindlichen Einzelgütern zusammengefasst. Die Anzahl der Güter je Gruppe richtet sich nach den Verpackungsanforderungen der jeweiligen Verpackungsmaschine.

Um Stückgut, das in einem ununterbrochenen Produktstrom auf einem Transportband befördert wird, einzuteilen und unter Ausbildung von definierten Lücken zu gruppieren, werden i.d.R. sog. Einteilfinger eingesetzt, die zyklisch von unten her die Transportebene durchbrechen und zwischen die Artikel nach oben geschoben werden, um durch Beschleunigen oder Verzögern der daran anliegenden Artikel die gewünschten Lücken auszubilden. Anschließend tauchen die Einzelfinger wieder nach unten ab, damit sie den weiteren Artikelstrom nicht beeinträchtigen. Diese Vorgänge wiederholen sich permanent, so dass normalerweise eine Mehrzahl von endlos umlaufenden Einteilfingern erforderlich sind, die bspw. mittels Kettenzugmittel o. dgl. unterhalb der Transportebene umlaufend bewegt werden.

Die DE 10 2004 042 474 A1 offenbart eine solche Vorrichtung zum Gruppieren von Stückgut, das einen geschlossenen Strom von einem Transportmittel entlang einer Transportebene zugeführt und durch mehrere von unten quer zur Transportebene in den Strom einführbare Einteilerfinger längs zur Förderrichtung gruppiert wird. Für die Einteilfinger oder Einteilerfinder sind Antriebsmittel vorgesehen, die eine Bewegung der Finger quer zur Transportebene (z-Richtung) unabhängig von einer Bewegung längs zu Förderrichtung (y-Richtung) und umgekehrt frei einstellbar ausführen können. Diese Einteilerfinger sind paarweise oder zu mehreren auf Einteilerleisten befestigt, die in der benötigten Weise bewegt werden. Als motorische Antriebsmittel für die Einteilerleisten werden Servomotoren oder Linearmotoren vorgeschlagen.

Die WO 99/03766 offenbart weiterhin eine Gruppiervorrichtung zur Herstellung von Lücken in einem einreihigen Artikelstrom, der in linearer Richtung bewegt wird. Die Einteilfinger befinden sich hierbei auf einem Schlitten, der oszillierend parallel zur Transportrichtung bewegt wird, um nach Ausbildung einer Lücke gewünschter Länge in schneller Vorschubbewegung zur nächsten Lückenbildung zurückbewegt zu werden. Das Eintauchen der Einteilfinger zwischen die einzelnen Artikel in einer Hubbewegung quer zur Transportrichtung wird mittels einer Hubeinrichtung bewirkt, die am Schlitten befestigt ist und mit diesem bewegt wird. Die oszillierenden Bewegungen des Schlittens werden durch einen Linearmotor gesteuert.

Die aus dem Stand der Technik bekannten Gruppiervorrichtungen, die mit Einteilfingern und/oder Einteilerleisten arbeiten, sind weitestgehend an konstruktiv festgelegte Bewegungsbahnen gebunden. Eine Variation der Bewegungsführung ist bei den meisten Vorrichtungen nur durch bauliche Veränderungen möglich. So werden bei vielen bekannten Gruppiervorrichtungen die zu gruppierenden Behälter wie PET-Flaschen, Dosen, Glasbehälter o. dgl. mit sog. Kulisseneinteilern in die gewünschten Formationen gebracht und der Maschine zugeteilt. Solche Systeme umfassen meist zwei unabhängig voneinander betriebene Kettensysteme, mit deren Hilfe Balken mit Einteilfingern bewegt werden. Die zulässigen Formatabmessungen sind abhängig von der Teilung des Kettensystems.

Die Gruppiervorrichtung gemäß der WO 99/03766 erlaubt zwar eine individuellere Steuerung des Einteilfingers, ist jedoch aufgrund ihres Aufbaus in ihrer Kapazität beschränkt, da die maximal mögliche Vorschubgeschwindigkeit des Linearmotors die Verarbeitungsgeschwindigkeit begrenzt. Zudem erlaubt die dort offenbarte Vorrichtung nur den Einsatz eines einzelnen Einteilfingers.

DE 10 2008 040 204 A1 beschreibt eine gattungsgemäße vorrichtung.

Das Ziel der vorliegenden Erfindung wird darin gesehen, eine verbesserte Vorrichtung und ein entsprechendes Verfahren zum Gruppieren von Stückgut zur Verfügung zu stellen, die bei hoher Verarbeitungsgeschwindigkeit eine weitgehende Variabilität hinsichtlich der verarbeitbaren Formatabmessungen und der individuellen Steuerung der Einteilerelemente liefert.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen.

Zur Erreichung des genannten Ziels schlägt die Erfindung eine Vorrichtung zum Gruppieren von Stückgut mit den Merkmalen des unabhängigen Anspruchs 1 vor, bei der das Stückgut mittels einer Transportvorrichtung in einem im Wesentlichen geschlossenen Förderstrom über eine Transportstrecke befördert wird. Die Vorrichtung umfasst bewegliche und quer zur Transportrichtung in den Förderstrom eingreifende Einteilerelemente zur Ausbildung von Lücken zwischen aufeinander folgend transportierten Stückgütern. Einzelne oder mehrere dieser beweglichen Einteilerelemente sind jeweils Einteileinrichtungen zugeordnet, die jeweils über getriebelose Direktantriebe verfügen. Die Einteileinrichtungen werden entlang einer geschlossenen, zumindest abschnittsweise parallel zur Transportstrecke verlaufenden Bewegungsbahn umlaufend bewegt, wobei die Vorschubbewegungen und/oder die Vorschubgeschwindigkeiten der Einteileinrichtungen entlang der Bewegungsbahn individuell und/oder unabhängig für jede Einteileinrichtung steuerbar sind. So sind die Vorschubbewegungen und/oder -geschwindigkeiten der Einteileinrichtungen insbesondere in Abhängigkeit von unterschiedlichen Betriebsparametern wie bspw. veränderlichen Lückenbreiten zwischen aufeinander folgenden Gruppen von Stückgütern variabel. Gemäß der Erfindung laufen die einzelnen Einteileinrichtungen, angetrieben über ihre getriebelosen Direktantriebe, jeweils unabhängig voneinander und/oder in jeweils unterschiedlichen Vorschubgeschwindigkeiten entlang der geschlossenen Bewegungsbahn um, wobei die Vorschubgeschwindigkeiten der einzelnen Einteileinrichtungen mit den diesen jeweils zugeordneten Einteilererelementen entlang der Bewegungsbahn in Abhängigkeit von veränderlichen Lückeribreiten zwischen aufeinander folgenden Gruppen von Stückgütern und/oder in Abhängigkeit von den jeweiligen Positionen der einzelnen Einteileinrichtungen in Bezug auf die entlang der Transportstrecke beförderten und gruppierten Stückgüter und/oder in Abhängigkeit von einem gewählten Betriebs- und/oder Wartungsmodus der Vorrichtung variabel sind, wie dies weiter unten noch näher erläutert wird.

Gemäß der Erfindung sind die Bewegungsbahnen der Einteilerelemente bzw. Einteileinrichtungen jeweils mit magnetischen oder elektromagnetischen Antrieben versehen. So können die Bewegungsbahnen insbesondere als Langstatoren von Linearmotorabschnitten ausgebildet sein. Grundsätzlich kommen auch andere Antriebsvarianten als Antriebe für die Einteilerelemente in Frage, die in der Lage sein müssen, mit variablen Vorschubgeschwindigkeiten in umlaufender Bewegungsbahn bewegt zu werden. Auch können Teile der Einteilerelemente selbst die Antriebe bilden. Wenn in diesem Zusammenhang von variablen oder unterschiedlichen Vorschubgeschwindigkeiten die Rede ist, so sind damit nicht nur variable Geschwindigkeiten der einzelnen Einteileinrichtungen über ihre geschlossene Umlaufbahn gemeint, sondern insbesondere auch jeweils unterschiedliche Geschwindigkeiten der einzelnen Einteileinrichtungen, die in Abhängigkeit von ihren jeweiligen Positionen entweder gegenüber der Fördergeschwindigkeit der Transportvorrichtung leicht verzögert oder gegenüber dieser deutlich beschleunigt bewegt werden können.

Die erfindungsgemäße Vorrichtung kombiniert die bekannte Einteiltechnik mit Einteilfingern, die auf umlaufenden Balken angeordnet sind, mit einen neuen Antriebssystem, das durch getriebelose Direktantriebe gebildet ist. Die Einteilfingerbalken werden einseitig oder beidseitig durch Permanentmagnetläufer oder ähnliche Magnetantriebe angetrieben. Mit dieser Anordnung können mehrere Einteilfingerbalken auf nur einer Rundlaufbahn unabhängig voneinander bewegt werden, wodurch Formationsabstände frei von mechanischen Teilungen verstellt werden können, wahlweise auch während des laufenden Betriebes. Die Einteilerelemente bzw. Einteilfingerbalken können auf Grund ihrer mechanischen Entkoppelung mit der zur Gruppierung erforderlichen, auf die Transportgeschwindigkeit des Förderbandes abgestimmten Geschwindigkeit bewegt werden. Sie können zudem mit schneller Geschwindigkeit bei der Leer-Rückfahrt bewegt werden. Aufgrund dieser schnellen Rückfahrt kann die Anzahl der insgesamt erforderlichen Einteilerelemente bzw. Einteilfingerbalken reduziert werden.

Die unabhängige Steuerungsmöglichkeit für die Mehrzahl an vorhandenen und entlang der vorgegebenen Bewegungsbahnen steuerbaren Einteilfingerbalken ermöglicht eine vorteilhafte Funktionserweiterung der erfindungsgemäßen Vorrichtung, da diese für eine teil- oder vollautomatische Verstellbarkeit der Transportgassenbreiten vorbereitet sein kann. Wenn hierbei die Möglichkeit besteht, die Einteilerelemente bzw. Einteilfinger zumindest temporär vollständig unter ein Höhenniveau der Transportstrecke abzusenken, besteht keine Kollisionsgefahr der Einteilerelemente mit den in ihrer Position verstellbaren Behältertransportspuren. Alternativ oder zusätzlich kann diese Kollisionsgefahr zwischen den Einteilerelementen und den Behältertransportspuren auch dadurch beseitigt werden, indem die Einteileinrichtungen bzw. Einteilfingerbalken in einem Bereich gesammelt oder gestaut werden, der von der Transportstrecke ausreichend weit entfernt ist. Dies ist typischerweise ein Bereich einer unteren Schleife der Bewegungsbahn, über den die umlaufenden Einteileinrichtungen nach dem Gruppiervorgang an den Anfang des Eingriffsbereichs mit den geförderten Stückgütern oder Behältern zurückgeführt werden.

Bei einer entsprechenden Positionierung der Einteilerelemente und/oder der ganzen Einteileinrichtungen können dann die Behältertransportspuren und ggf. die dazwischen angeordneten trennenden Gassenbleche mittels Spindelantrieben oder anderen geeigneten Verstellelementen in ihren Abständen zueinander auf unterschiedlich dimensionierte Behälter oder Stückgüter eingestellt werden, insbesondere mittels einer teil- oder vollautomatischen Steuerung. Da bei einer solchen Verstellung auch die Einteilfingerabstände in entsprechender Weise verstellt werden müssen, kann in einer vorteilhaften Ausgestaltung der Erfindung vorgesehen sein, dass die Einteileinrichtungen für eine entsprechende Verstellbarkeit vorbereitet sind. Auch diese Verstellbarkeit kann teil- oder vollautomatisch, vorzugsweise in Koppelung mit der Transportspurverstellung gekoppelt erfolgen. Wahlweise können die Einteileinrichtungen mit Spindelverstellungen, mit einem Scherenmechanismus oder einem anderen geeigneten Verstellmechanismus ausgestattet sein. In einer einfachen Ausführungsvariante kann jedoch auch eine manuelle Verstellung der Einteilerelemente bzw. Einteilfinger vorgesehen sein, bspw. eine Fixierungsmöglichkeit der Einteilfinger in verschiedenen vorgegebenen Einbaupositionen.

Eine Variante der erfindungsgemäßen Vorrichtung sieht vor, dass zumindest an einer Längsseite der Transportstrecke eine einseitig angeordnete Bewegungsbahn als Antrieb bzw. Magnetantrieb angeordnet ist. Wahlweise können auch an beiden Längsseiten der Transportstrecke jeweils symmetrisch angeordnete Bewegungsbahnen als Antriebe bzw. Magnetantriebe angeordnet sein, so dass eine weitgehend symmetrische Anordnung beidseitiger Bewegungsbahnen als Antriebe gebildet ist.

Eine weitere vorteilhafte Variante kann vorsehen, dass die beidseitig der Transportstrecke angeordneten Bewegungsbahnen jeweils als unabhängig voneinander steuerbare Antriebe für die Einteilerelemente ausgebildet sind. Somit können die beidseitig angeordneten Bewegungsbahnen als unabhängig voneinander steuerbare Antriebe für jeweils die Hälfte der insgesamt vorhandenen Einteilerelemente dienen. Die baulich ggf. symmetrische Anordnung unterscheidet sich von der zuvor genannten Variante dadurch, dass die beiden seitlich angeordneten Antriebe unabhängig voneinander steuerbar sind.

Die Einteilfinger auf den durch die seitlichen Magnetantriebe bewegten Balken müssen zur Erfüllung ihrer Einteilaufgaben vertikal bewegt werden, damit sie neben den Behältertransportspuren auftauchen und den Einteilvorgang durchführen können. Die bekannte Technik besteht hierbei darin, den Behälterstrom mittels der auftauchenden Einteilfinger zurückzuhalten und eine Behälterformation durch schneller laufende Transportspuren ablaufen zu lassen. Gemäß einer weiteren bevorzugten Ausführungsvariante kann insbesondere vorgesehen sein, dass jedem Antriebselement jeweils mehrere Einteilerelemente zugeordnet sind, die einzeln oder paarweise oder gruppenweise unabhängig voneinander beweglich sind. So können bspw. mehrere Einteilerelemente jeweils paarweise angeordnet für jede Reihe von hintereinander beförderten Stückgüter vorgesehen sein, wobei mehrere Einteilerelemente jeweils einem gemeinsamen Antriebsschlitten zugeordnet sind. Die zur Abtrennung der Gruppen von Behältern erforderliche Vertikalbewegung der Einteilerfinger kann in vorteilhafter Weise dadurch realisiert werden, dass der Einteilfingerbalken durch eine geeignete Parallelogramm-Kinematik mit zwei zueinander verstellbaren Magnetantrieben bewegt wird. So kann insbesondere jeder Antriebsschlitten für jeweils einen Einteilfingerbalken einen solchen Parallelogramm-Mechanismus zur Höhenverstellung der Einteilerelemente aufweisen.

Da die Magnetantriebe unabhängig voneinander auf der Antriebsbahn bewegt werden können, kann durch Veränderung des Abstandes in Laufrichtung der beiden Magnetantriebe über die erfindungsgemäße Parallelogramm-Kinematik eine Vertikalbewegung definierter Höhe erzeugt werden. Um diese Vertikalbewegung zu erreichen, weist der Parallelogramm-Mechanismus wenigstens zwei in ihrem Abstand veränderliche Koppelelemente auf. Zum Heben der Finger werden die beiden Elemente um einen definierten Weg auseinander gefahren; zum Absenken der Finger werden sie aneinander gefahren, was mittels der exakt steuerbaren Magnetantriebe problemlos mit sehr hoher Bewegungsgeschwindigkeit realisierbar ist.

Die vorliegende Erfindung umfasst neben der zuvor in verschiedenen Ausführungsvarianten erläuterten Vorrichtung auch ein entsprechendes Verfahren zum Gruppieren von Stückgut, welches mittels einer Transportvorrichtung in einem im Wesentlichen geschlossenen Förderstrom über eine Transportstrecke befördert wird. Das Stückgut wird dabei mittels beweglicher und quer zur Transportrichtung in den Förderstrom eingreifender Einteilerelemente gruppiert, indem Lücken zwischen aufeinander folgend transportierten Stückgütern ausgebildet werden. Bei dem Verfahren laufen die beweglichen Einteilerelemente entlang einer geschlossenen, zumindest abschnittsweise parallel zur Transportstrecke verlaufenden Bewegungsbahn um. Mehrere Einteilerelemente sind typischerweise jeweils einer Einteileinrichtung zugeordnet, bspw. einem Einteilfingerbalken o. dgl. Die Vorschubgeschwindigkeiten und/oder -bewegungen der Einteileinrichtungen mit den darauf befindlichen Einteilerelementen können mit Hilfe von getriebelosen Direktantrieben entlang der Bewegungsbahn variiert und vorzugsweise jeweils individuell gesteuert werden. So können die Bewegungen und/oder Geschwindigkeiten der Einteileinrichtungen bspw. in Abhängigkeit von veränderlichen Lückenbreiten zwischen aufeinander folgenden Gruppen von Stückgütern variiert werden. Die einzelnen Vorschubgeschwindigkeiten der jeweils mit Einteilelementen versehenen Einteileinrichtungen können wahlweise auch entlang der Transportstrecke variiert werden, insbesondere im Verlauf des Gruppiervorganges, was durch die magnetischen Einzelantriebe der Einteileinrichtungen ermöglicht wird. Weiterhin ermöglicht die Erfindung eine einfache Handhabung der Einteileinrichtungen, um verschiedene Betriebs- und/oder Wartungsmodi durchführen zu können, bspw. eine Spurgassenverstellung zur Handhabung von unterschiedlichen Stückgutgrößen.

Die beidseitig der Transportstrecke angeordneten Bewegungsbahnen können jeweils als unabhängig voneinander steuerbare Antriebe für die Einteilerelemente ausgebildet sein, so dass beidseitige Bewegungsbahnen als Antriebe dienen können. Die Anordnung erscheint symmetrisch, jedoch können die den einzelnen Magnetantrieben zugeordneten Einteilerelemente unabhängig voneinander gesteuert werden.

Eine mögliche Ausführungsvariante der Erfindung kann bspw. vorsehen, dass der geschlossene Förderstrom drei Reihen von Behältern umfasst, die jeweils nebeneinander auf parallelen Transportspuren befördert werden. Für diesen Fall sind jedem Einteilerelement insgesamt sechs Einteilfinger zuzuordnen, um jeden der nebeneinander beförderten Behälter oder Stückgüter mit jeweils zwei Einteilfingern zuverlässig zu führen. Die Einteilfinger führen alle Hebe- und Senkbewegungen synchron aus, da sie bspw. an einem gemeinsamen unteren Balken verankert sein können, der die Vertikalbewegungen vorgibt und steuert. Jedes Paar von nebeneinander angeordneten Einteilfingern dient damit zur Anlage an jeweils einer von drei fluchtend nebeneinander beförderten Behältermantelflächen. Das Einteilerelement kann entsprechend seiner Ausgestaltung auch als Paar von miteinander gekoppelten Antriebselementen bezeichnet werden, bei denen bspw. U-förmig ausgebildete Führungsbacken, die jeweils in den linken und rechten Führungs- bzw. Bewegungsbahnen angetrieben geführt sind, sowohl für den Längsantrieb der Einteilerelemente als auch für die Vertikalbewegung der Einteilfinger sorgen. Anstelle von U-förmig ausgebildeten Führungsbacken können wahlweise auch die Führungselemente U-förmige Querschnitte aufweisen, so dass sie zur lenkenden Führung von flachen, stempelartigen oder anderweitig gestalteten angetriebenen Führungsbacken oder -elementen für die Einteilerelemente geeignet sind. Grundsätzlich besteht ein wichtiger Aspekt der vorliegenden Erfindung darin, dass Teile der Einteilerleiste oder Einteilerelemente einen Teil des Antriebs bilden.

Durch die jeweils mit den Führungsbacken zusammenwirkenden Linearantriebselemente der Bewegungsbahnen können die Führungsbacken aneinander gezogen oder voneinander distanziert werden, wodurch gleichzeitig der untere Balken mit den darauf verankerten Einteilfingern gesenkt oder gehoben wird. An den zueinander weisenden vertikalen Rückseiten der Führungsbacken können jeweils an gemeinsamen Achsen zwei Arme und gleicher Länge gelenkig gelagert sein, deren anderes Ende jeweils in einer gemeinsamen Lagerung den unteren Balken und einen oberen Balken führt. Somit kann bspw. jedes der beiden miteinander gekoppelten Antriebselemente einen linken und einen rechten oberen Arm sowie einen linken und rechten unteren Arm umfassen, die durch ihre Anordnung und Verbindungsstellen sowie aufgrund derselben Länge aller Arme eine Parallelogrammführung für die oberen und unteren Balken bilden, die eine vertikale Bewegung der Einteilfinger ermöglicht. Während der untere Balken direkten Einfluss auf die Vertikalbewegung der Einteilfinger hat, trägt der obere Balken zur exakten Führung der Einteilfinger mittels entsprechend dimensionierter und platzierter Führungslöcher sowie zur Bildung der exakt arbeitenden Parallelogramm-Kinematik bei.

Die zur Abtrennung der Gruppen von Behältern erforderliche Vertikalbewegung der Einteilerfinger kann somit in vorteilhafter Weise dadurch realisiert werden, dass der untere Einteilfingerbalken durch die beschriebene Parallelogramm-Kinematik, über welche die beiden in ihrem Abstand zueinander verstellbaren Magnetantriebe der vorderen und hinteren Antriebselemente angenähert oder distanziert werden, in vertikaler Richtung bewegt wird. Zu diesem Zweck weist jedes einzelne von typischerweise mehreren unabhängig voneinander entlang der Bewegungsbahn beweglichen Einteilerelemente einen solchen Parallelogramm-Mechanismus zur Höhenverstellung der Einteilfinger auf. Das in einem ersten Abschnitt der Bewegungsbahn befindliche Einteilerelement befindet sich in einem Betriebsmodus, bei dem die beiden gekoppelten Antriebselemente in ihrer maximalen Distanz voneinander in Transportrichtung bewegt werden. Diese Bewegung ist jedoch etwas langsamer als der geschlossene Förderstrom mit den Behältern, deren vorderste Reihe an den nach oben gefahrenen Einteilfingern anliegt, wodurch der gesamte Förderstrom leicht gegenüber den Behältertransportspuren und damit auch gegenüber der vorauseilenden Gruppe von Behältern verzögert wird. Das bereits im sich an den ersten Sektor anschließenden weiteren Sektor befindliche vorauseilende Einteilerelement kann gegenüber dem im ersten Sektor im Eingriff mit dem Förderstrom befindlichen Einteilerelement leicht beschleunigt werden, wobei gleichzeitig die beiden Antriebselemente zueinander bewegt werden, um ihren Abstand voneinander zu minimieren, wodurch gleichzeitig die oberen und unteren Arme der Parallelogramm-Kinematik nach oben bzw. nach unten geschwenkt werden, so dass der untere Balken mit den daran verankerten Einteilfingern nach unten und der obere Balken nach oben bewegt werden. Die Einteilfinger werden dadurch unterhalb des Niveaus der Behältertransportspuren abgesenkt, so dass im zweiten Sektor der Bewegungsbahn keine Kollision mit den Behältern der vorauseilenden Gruppe droht. Die Rückbewegung der Einteilerelemente entgegen der Transportrichtung der Behälter entlang des unteren Abschnittes der geschlossenen Bewegungsbahn kann dagegen deutlich beschleunigt erfolgen, was den Vorteil hat, insgesamt weniger Einteilerelemente einsetzen zu müssen.

Nachfolgend sollen noch einige Vorteile der erfindungsgemäßen Vorrichtung und des erfindungsgemäßen Verfahrens gegenüber den aus dem Stand der Technik bekannten Gruppiersystemen genannt werden. So ist jederzeit eine flexible Verstellung der Einteilerelemente auf neue Formatbereiche möglich, ohne dass Einschränkungen aufgrund mechanischer Kettenteilungen beachtet werden müssen. Es können bei gleicher Kapazität weniger Einteilfingerbalken eingesetzt werden, da die Fingerbalken schneller gegen die Transportrichtung zurück bewegt werden können, wodurch sich innerhalb eines bestimmten Zeitraums mehr Einteilfingerbalken im Eingriff mit den zu gruppierenden Artikeln befinden können als gerade im Rücklauf zurück gefördert werden. Der Vertikalhub bzw. die Auftauchhöhe der Einteilfinger ist flexibel steuerbar, indem die Abstände der jeweiligen Antriebspaare mit ihren Magnetantrieben entsprechend gesteuert werden. Während konventionelle Kulisseneinteiler zwei umlaufende Kettensysteme benötigen, genügt für das erfindungsgemäße Linearsystem bereits ein einzelnes Bahnsystem. Weiterhin kann ein Verarbeitungsprogramm für spezifische Formatteile entfallen; auch kann auf Kulissenführungen zur Realisierung der Senkrechtstellung der Einteilsysteme verzichtet werden, wie sie bei herkömmlichen Systemen erforderlich sind. Nicht zuletzt liefert der Magnetantrieb eine einfache und sehr zuverlässig funktionierende Überlastsicherung für Situationen, bei denen bspw. ein zu großer Staudruck gebildet wird. Mit dem Magnetantrieb lassen sich somit mechanische Schäden weitgehend ausschließen.

Das erfindungsgemäße Verfahren kann in vorteilhafter Weise dadurch variiert werden, dass die Einteilerelemente bzw. Einteilfinger zumindest temporär vollständig aus dem räumlichen Bereich der Transportstrecke und/oder von Behältertransportspuren der Transportstrecke gebracht werden. In diesem Zusammenhang kann vorgesehen sein, dass die Einteilerelemente bzw. Einteilfingern zumindest temporär vollständig unter ein Höhenniveau der Transportstrecke abgesenkt werden. Da die Mehrzahl an entlang der vorgegebenen Bewegungsbahnen umlaufenden Einteilfingerbalken mit unterschiedlichen Geschwindigkeiten bewegt werden können und damit in gewissen Grenzen unabhängig voneinander steuerbar sind, kann eine teil- oder vollautomatische Verstellung der Transportgassenbreiten realisiert werden. Wenn hierbei die Möglichkeit besteht, die Einteilerelemente bzw. Einteilfinger zumindest temporär vollständig unter ein Höhenniveau der Transportstrecke abzusenken, besteht keine Kollisionsgefahr der Einteilerelemente mit den in ihrer Position verstellbaren Behältertransportspuren.

Bei einer weiteren Variante des erfindungsgemäßen Verfahrens können die Einteileinrichtungen zumindest temporär in einen Sektor der Bewegungsbahn gebracht und insbesondere dort gesammelt werden, der entfernt von unterhalb der Transportstrecke bzw. der Behältertransportspuren und wahlweise parallel dazu verlaufenden Sektoren der Bewegungsbahn verläuft. Dieser Parksektor für die Einteileinrichtungen muss nicht zwingend parallel zum oberen Abschnitt bzw. Sektor der Bewegungsbahn verlaufen, in dem die Einteileinrichtungen unterhalb der Transportstrecke bewegt werden. Normalerweise jedoch weist die Bewegungsbahn eine Kontur mit zwei parallelen horizontalen Abschnitten auf, die über symmetrische Kurven miteinander verbunden sind. Auch bei dieser Variante des Verfahrens kann die Kollisionsgefahr zwischen den Einteilerelementen und den Behältertransportspuren beseitigt werden, da hierbei die Einteileinrichtungen bzw. Einteilfingerbalken in einem Bereich gesammelt oder gestaut werden, der von der Transportstrecke ausreichend weit entfernt ist. Dies ist normalerweise der Bereich der unteren Schleife der Bewegungsbahn, über den die umlaufenden Einteileinrichtungen nach dem Gruppiervorgang an den Anfang des Eingriffsbereichs mit den geförderten Stückgütern oder Behältern zurückgeführt werden. Bei einer entsprechenden Positionierung der Einteilerelemente können die Behältertransportspuren und ggf. die dazwischen angeordneten trennenden Gassenbleche in ihren Abständen zueinander auf unterschiedlich dimensionierte Behälter oder Stückgüter eingestellt werden. Aufgrund der aus dem Kollisionsbereich gebrachten Einteileinrichtungen kann diese Verstellung in vorteilhafter Weise teil- oder vollautomatisch gesteuert werden.

Eine weitere Variante der erfindungsgemäßen Vorrichtung zum Gruppieren von Stückgut bzw. von Behältern, die in Transportrichtung mittels der Transportvorrichtung auf der Transportstrecke befördert werden, kann eine modifizierte Bewegungsbahn für die Einteileinrichtungen aufweisen. Wie erwähnt können einzelne, mehrere oder alle jeweils eingesetzten Einteileinrichtungen wahlweise temporär in einen von der Transportstrecke entfernten unteren Sektor der Bewegungsbahn gebracht und dort gesammelt und aufgestaut werden, bspw. um eine Gassenverstellung der Transportstrecke durchführen zu können. Darüber hinaus kann die Bewegungsbahn wahlweise mit einem zusätzlichen Zweigabschnitt versehen sein, so dass einzelne oder mehrere Einteileinrichtungen in diesen unteren Zweigsektor der Bewegungsbahn gebracht und dort gesammelt und gestaut werden können. In diesem Zweigsektor können einzelne oder mehrere Einteileinrichtungen "geparkt" und bei Bedarf der umlaufenden Bewegungsbahn zugeführt werden. Das Abstellen von Einteileinrichtungen in diesem Zweigsektor ist problemlos mit Hilfe der getriebelosen Direktantriebe der Einteileinrichtungen möglich, da diese bei Bedarf in umgekehrter Antriebsrichtung in den entsprechenden Zweigsektor befördert werden oder in normaler Antriebsrichtung wieder aus dem Sektor herausgefahren werden können.

Der optionale Parksektor kann somit bspw. genutzt werden, um die Einteileinrichtungen an unterschiedliche Einstellungen der Transportstrecke anzupassen. Ebenso möglich ist jedoch eine Zwischenspeicherung von nicht benötigten Einteileinrichtungen, da bspw. im gesamten Einteilprozess aufgrund relativ großer Artikelgruppen und entsprechend geringer Anzahl von Lücken entlang der relevanten Transportstrecke nur wenige Einteileinrichtungen benötigt werden. Bei anderen Prozessparametern mit z.B. kürzeren Gruppen und entsprechend größerer Anzahl von Lücken können zusätzliche Einteileinrichtungen aus dem Sektor entnommen und der Bewegungsbahn zugeführt werden. Die getriebelosen Direktantriebe der Einteileinrichtungen ermöglichen eine solche Variation der jeweils eingesetzten Einteileinrichtungen. Der Zweigsektor der Bewegungsbahn kann bspw. durch eine einseitige Verlängerung eines unteren Abschnittes gebildet sein, der als Sackgasse endet.

Wenn im vorliegenden Zusammenhang von Einteilerelementen die Rede ist, so sind damit normalerweise die Einteilfinger gemeint, die jedoch grundsätzlich auch andere Formgebungen aufweisen können als finger- oder stabartige Konturen. Mehrere dieser Einteilerelemente bzw. Einteilfinger sind normalerweise in paralleler Reihe auf einem Einteilfingerbalken angeordnet, der teilweise auch allgemeiner als Einteileinrichtung bezeichnet wird. Der allgemeine Begriff Einteileinrichtung bezeichnet das Funktionselement, das durch seine Bewegungssteuerung in der Lage ist, die gewünschte Artikeleinteilung vorzunehmen und die Artikel in der gewünschten Weise zu gruppieren. Die Einteileinrichtung greift somit in funktionaler Hinsicht teilweise in den Behälterstrom ein, wogegen die Einteilfinger bzw. die Einteilerelemente tatsächlich mit einem oberen Abschnitt in den Behälterstrom eintauchen, da sie durch die Transportebene hindurch von unten in den Artikelstrom hineinragen müssen, bevor sie nach dem Gruppiervorgang wieder aus dem berührenden Eingriff mit den Artikeln gebracht werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine perspektivische Ansicht einer Ausführungsvariante einer erfindungsgemäßen Vorrichtung zum Gruppieren von Stückgut.
Fig. 2 zeigt eine schematische Seitenansicht der Vorrichtung gemäß Fig. 1.
Fig. 3 zeigt eine Draufsicht auf die Vorrichtung gemäß Fig. 1 und Fig. 2.
Fig. 4 zeigt verschiedene Sektoren einer Bewegungsbahn zur Führung von Einteilerelementen der Vorrichtung gemäß Fig. 1.
Fig. 5 zeigt eine perspektivische Detailansicht eines Einteilerelements, das über einen Parallelogramm-Mechanismus zum Heben und Senken von Einteilfingern verfügt.
Fig. 6 zeigt eine weitere perspektivische Detailansicht des Einteilerelements, wobei gegenüber dem Betriebsmodus gemäß Fig. 5 die Einteilfinger zur Ausbildung von Stückgutgruppen angehoben sind.
Fig. 7 verdeutlicht anhand der Sektoren der Bewegungsbahn entsprechend Fig. 4 eine Variante der erfindungsgemäßen Vorrichtung zum Gruppieren von Stückgut.

Fig. 8 verdeutlicht eine weitere Variante einer Bewegungsbahn der erfindungsgemäßen Vorrichtung zum Gruppieren von Stückgut.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

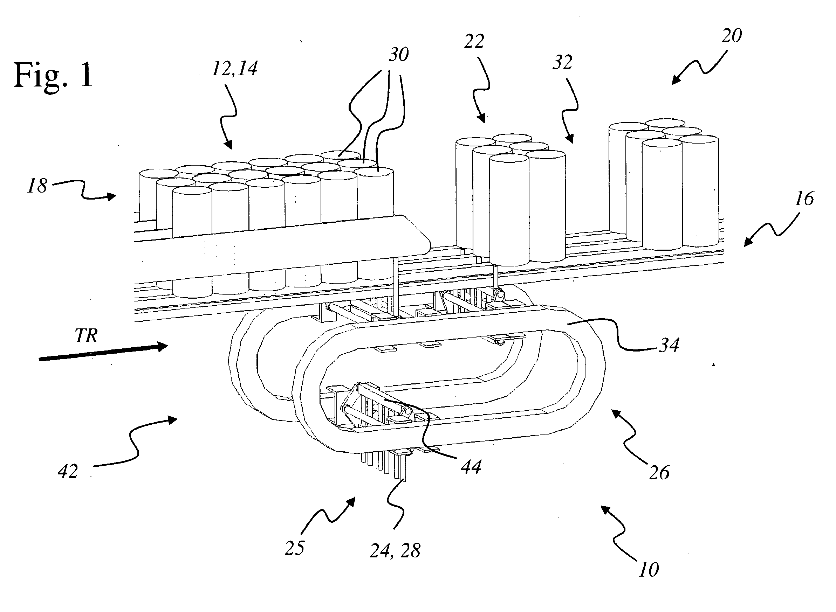

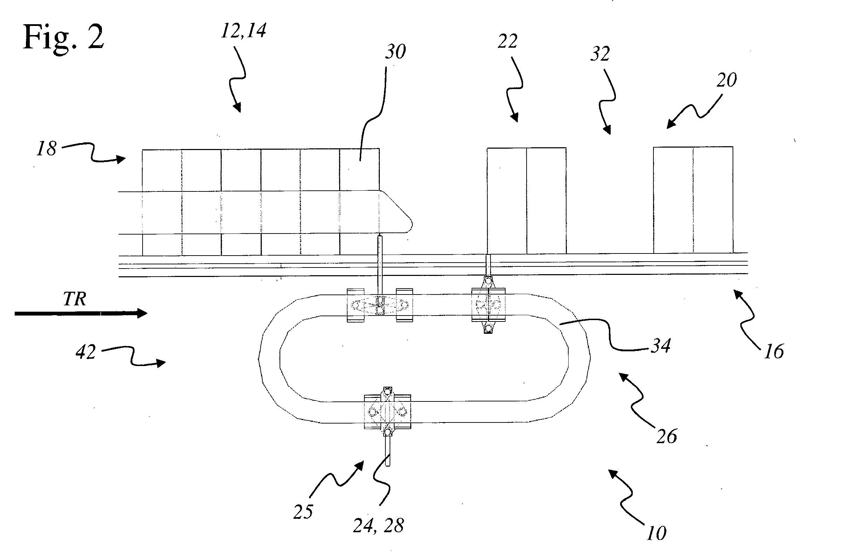

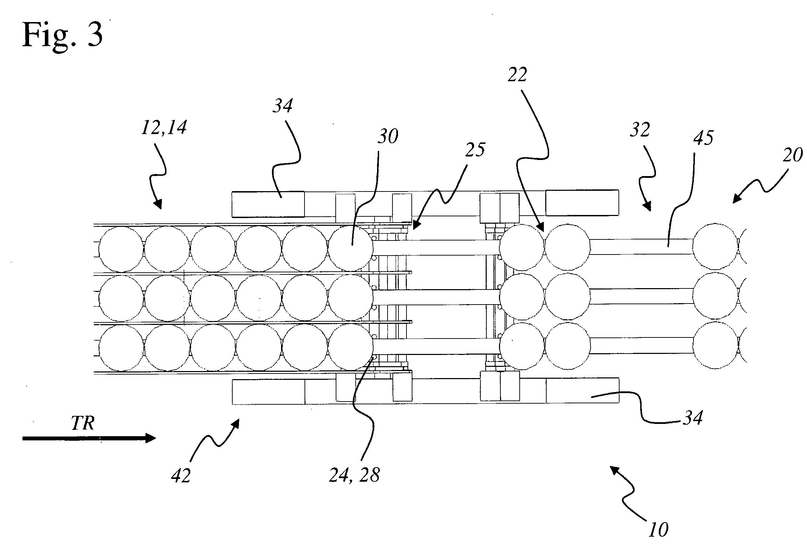

Die perspektivische Darstellung der Fig. 1, die schematische Seitenansicht der Fig. 2 und die Draufsicht der Fig. 3 verdeutlichen ein Ausführungsbeispiel einer erfindungsgemäßen Vorrichtung 10 zum Gruppieren von Stückgut 12, das in Gestalt von zylindrischen Behältern 14 in Dreierreihen mittels einer Transportvorrichtung 16 in einem geschlossenen Förderstrom18 über eine Transportstrecke 20 befördert und in deren Verlauf in Transportrichtung TR das Stückgut 12 in jeweils voneinander beabstandete Gruppen 22 von jeweils zwei hintereinander und drei nebeneinander stehenden Behältern 14 zusammengefasst wird. Die Gruppierung des Stückguts 12 bzw. der Behälter 14 erfolgt mittels beweglicher und von unten und quer zur Transportrichtung TR in den Förderstrom 18 eingreifender Einteilerelemente 24, die für die Ausbildung von Lücken zwischen aufeinander folgend transportierten Gruppen 22 von Stückgütern 12 sorgen. Mehrere Einteilerelemente 24, die im gezeigten Ausführungsbeispiel jeweils durch längliche, stabartige Einteilfinger 28 gebildet sind, sind einer gemeinsamen Einteileinrichtung 25 zugeordnet, die hier als sog. Einteilfingerbalken ausgebildet ist.

Zur Gruppierung der Behälter 14 werden die Einteileinrichtungen 25 mitsamt den beweglich daran angeordneten Einteilerelementen 24 bzw. Einteilfingern 28 entlang einer geschlossenen, abschnittsweise parallel zur Transportstrecke 20 verlaufenden Bewegungsbahn 26 umlaufend bewegt. Die Einteileinrichtungen 25 mit den beweglich daran gelagerten Einteilerelementen 24 sind derart konfiguriert, dass jedem Behälter 14 einer zu verzögernden Reihe jeweils zwei senkrecht von unten aus der Transportstrecke 20 auftauchende Einteilfinger 28 zugeordnet sind, die in ihrer Vorschubgeschwindigkeiten gegenüber der Fördergeschwindigkeit der horizontal fördernden Transportvorrichtung 16 zumindest geringfügig verzögert sind, so dass die vorderste Reihe 30 des noch geschlossenen Förderstroms mit Behältern 14 unter Ausbildung von Schlupf und unter Ausbildung einer Lücke 32 zur hinteren Reihe der in Transportrichtung TR vorauseilenden und zuvor vereinzelten Gruppe 22 abgebremst wird.

Wie anhand der Fig. 3 deutlich erkennbar ist, liegen die insgesamt sechs Einteilfinger 28 bzw. Einteilerelemente 24 einer Einteileinrichtung 25 in einer Reihe quer zur Transportrichtung TR, so dass jeweils zwei Einteilfinger 28 an der vorderen Mantelseite jedes der drei in vorderster Reihe 30 des geschlossenen Förderstroms 18 befindlichen Behälters 14 anliegen und diese durch Verzögerung gegenüber der mit konstanter Geschwindigkeit umlaufenden Transportvorrichtung 16 zurückhalten, bis die Lücke 32 in gewünschter Länge ausgebildet ist. Nachdem die Lücke 32 die gewünschte Länge erhalten hat, werden die zuvor an den Mantelseiten der Behälter 14 anliegenden Einteilfinger 28 entlang des oberen horizontalen Abschnittes 34 der Bewegungsbahn 26 gegenüber der Transportgeschwindigkeit TR der Transportvorrichtung 16 beschleunigt und von den Behältern 14 abgelöst. Gleichzeitig tauchen die Einteilfinger 28 zwischen den Transportspuren, auf denen die Behälter 14 transportiert werden, nach unten unterhalb des Förderniveaus der Stückgüter 12 ab, um völlig aus dem Eingriff mit diesen zu gelangen.

Die Vorschubgeschwindigkeiten der Einteileinrichtungen 25 variieren entlang der Bewegungsbahn 26 in Abhängigkeit von den veränderlichen Lückenbreiten zwischen den aufeinander folgenden Gruppen 32 der Stückgüter 12. Im gezeigten Ausführungsbeispiel der Erfindung sind die Bewegungsbahnen 26 der Einteileinrichtungen 25 jeweils mit elektromagnetischen Antrieben versehen und sind als Langstatoren von Linearmotorabschnitten oder als sog. Permanentmagnetläufer ausgebildet. Wie anhand der Figuren 1 und 3 verdeutlicht ist, befinden sich identisch verlaufende Bewegungsbahnen 26 links und rechts randseitig der Transportvorrichtung 16 und unterhalb deren Förderebene, so dass damit die erforderlichen Antriebskräfte auf die beidseitig in den Bewegungsbahnen 26 geführten und dort angetriebenen Einteileinrichtungen 24 aufgebracht werden können.

Mit der gezeigten Anordnung können mehrere Einteilfingerbalken bzw. Einteileinrichtungen 25 auf einer einzigen umlaufenden Bewegungsbahn 26 in gewissen Ausmaßen unabhängig voneinander bewegt werden, wodurch Formationsabstände frei von mechanischen Teilungen verstellt werden können, und dies wahlweise auch während des laufenden Betriebes. Die Einteileinrichtungen 25 bzw. Einteilfingerbalken können auf Grund ihrer mechanischen Entkoppelung voneinander mit der zur Gruppierung erforderlichen, auf die Transportgeschwindigkeit des Förderbandes abgestimmten Geschwindigkeit bewegt werden. Sie können zudem mit deutlich schnellerer Geschwindigkeit bei der Leer-Rückfahrt bewegt werden. Aufgrund dieser schnellen Rückfahrt kann die Anzahl der insgesamt erforderlichen Einteileinrichtungen 25 bzw. Einteilfingerbalken reduziert werden.

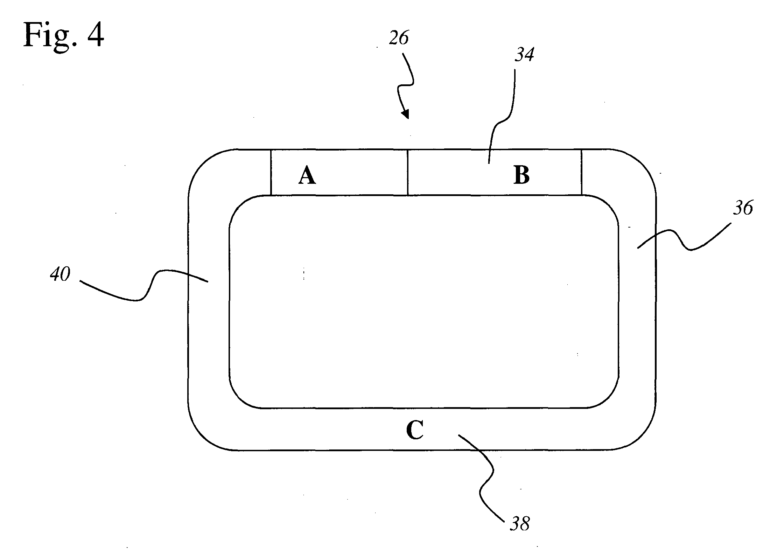

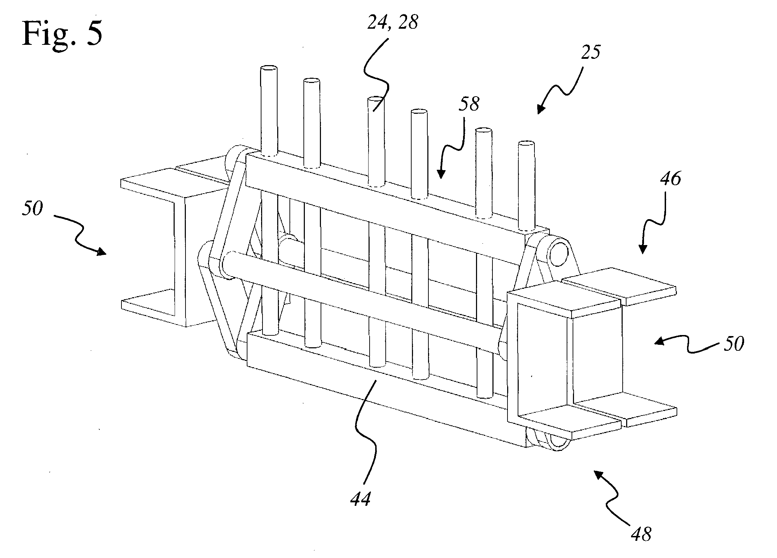

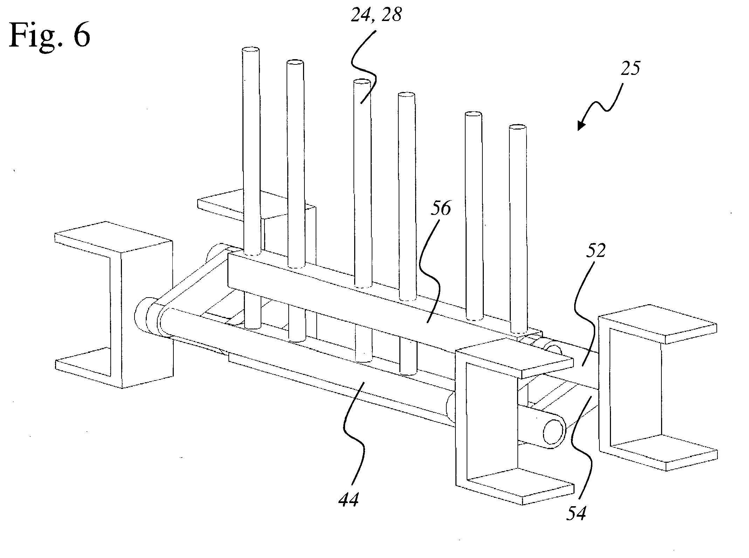

So verdeutlicht die Fig. 4 die verschiedenen Phasen beim Vorschub einer von mehreren Einteileinrichtungen 25, die permanent entlang der geschlossenen Bewegungsbahn 26 umlaufen und dabei in deutlich unterschiedlichen Geschwindigkeitsniveaus bewegt und angetrieben werden können. Die Vorschubgeschwindigkeit entlang des parallel zur Transportrichtung TR der Transportvorrichtung 16 verlaufenden oberen Abschnittes 34 der Bewegungsbahn 26 orientiert sich ausschließlich an den Vorgaben der Lückenbildung, so dass die Vorschubgeschwindigkeit im ersten Sektor A des oberen Abschnittes 34 gegenüber der Transportgeschwindigkeit der Behälter 14 bzw. Stückgüter 12 leicht reduziert ist. Sobald die Lücke 32 zwischen dem mittels der Einteilfinger 28 verzögerten geschlossenen Förderstrom 18 und der vorauseilenden Gruppe 22 von sechs Behältern 14 die gewünschte Länge erreicht hat, wird die Einteileinrichtung 25 im zweiten Sektor B des oberen Abschnittes 34 der Bewegungsbahn 26 beschleunigt, wodurch die Einteilfinger 28 von der vordersten Reihe 30 des geschlossenen Förderstroms 18 abgelöst werden. Gleichzeitig können die Einteilfinger 28 nach unten abgesenkt werden, um nicht mit der vorauseilenden Gruppe 22 von Behältern 14 zu kollidieren. Das Heben und Senken der Einteilfinger 28 wird weiter unten anhand der Detailansichten der Figuren 5 und 6 näher erläutert. Der dritte Teil C der Bewegungsbahn 26 kann wahlweise den gesamten verbleibenden Weg umfassen, nämlich den vorderen Bogen 36, der einen 180°-Winkel beschreibt, den sich daran anschließenden unteren Abschnitt 38, der parallel zum oberen Abschnitt 34 verläuft, und in dem die Einteilerelemente 24 entgegen der Transportrichtung TR in sog. Leer-Rückfahrt zum hinteren Bogen 40 bewegt werden, der wiederum einen 180°-Winkel beschreibt und an den sich der obere geradlinige Abschnitt 34 anschließt. Da die Einteileinrichtungen 25 über den gesamten dritten Teil C mit deutlich schnellerer Geschwindigkeit bewegt werden können, ist es möglich, die Anzahl der insgesamt erforderlichen Einteileinrichtungen 25 bzw. Einteilfingerbalken zu reduzieren.

Eine hier nicht gezeigte Variante der erfindungsgemäßen Vorrichtung 10 kann wahlweise vorsehen, dass zumindest an einer Längsseite der Transportstrecke 20 eine einseitig angeordnete Bewegungsbahn 26 als Antrieb bzw. Magnetantrieb angeordnet ist. Eine weitere alternative Variante kann vorsehen, dass die beidseitig der Transportstrecke 20 angeordneten Bewegungsbahnen 26 jeweils als unabhängig voneinander steuerbare Antriebe für die Einteileinrichtungen 25 ausgebildet sind. Somit können die beidseitig angeordneten Bewegungsbahnen 26 als unabhängig voneinander steuerbare Antriebe für jeweils die Hälfte der insgesamt vorhandenen Einteilerelemente 26 dienen. Die baulich ggf. symmetrische Anordnung unterscheidet sich von der im Ausführungsbeispiel und den Figuren beschriebenen Variante dadurch, dass die beiden seitlich angeordneten Antriebe unabhängig voneinander steuerbar sind.

Die Einteilfinger 28 auf den durch die seitlichen Magnetantriebe 42 bewegten Balken 44 müssen zur Erfüllung ihrer Einteilaufgaben vertikal bewegt werden, damit sie neben den in Querrichtung unterteilten Behältertransportspuren 45 auftauchen und den Einteilvorgang durchführen können. Die bekannte und bereits oben beschriebene Technik besteht darin, den Behälterstrom mittels der auftauchenden Einteilfinger 28 temporär und über Abschnitt A zurückzuhalten und eine Behälterformation bzw. Gruppe 22 an Behältern 14 durch die schneller laufenden Transportspuren 45 ablaufen zu lassen.

Wie anhand der Figuren 5 und 6 veranschaulicht, sind jeder Einteileinrichtung 25 im gezeigten Ausführungsbeispiel insgesamt sechs Einteilerelemente 24 bzw. Einteilfinger 28 zugeordnet, die alle Hebe- und Senkbewegungen synchron ausführen, da sie an einem gemeinsamen unteren Balken 44 verankert sind, der die Vertikalbewegungen vorgibt und steuert. Jedes Paar von nebeneinander angeordneten Einteilfingern 28 dient zur Anlage an jeweils einer von drei fluchtend nebeneinander beförderten Behältermantelflächen, wie dies in den Figuren 1 bis 3 verdeutlicht ist. Die Einteileinrichtung 25 kann entsprechend seiner Ausgestaltung auch als Paar von miteinander gekoppelten Antriebselementen 46 und 48 bezeichnet werden, da erst die U-förmig ausgebildeten Führungsbacken 50, die jeweils in den linken und rechten Führungs- bzw. Bewegungsbahnen 26 (vgl. Fig.1) angetrieben geführt sind, sowohl für den Längsantrieb der Einteileinrichtungen 25 als auch für die Vertikalbewegung der Einteilerelemente 24 bzw. Einteilfinger 28 sorgen. Anstelle der gezeigten U-förmig ausgebildeten Führungsbacken 50 können wahlweise auch die Führungselemente oder -schienen der Bewegungsbahnen 34 U-förmige Querschnitte (nicht dargestellt) aufweisen, so dass sie zur lenkenden Führung von flachen, stempelartigen oder anderweitig gestalteten angetriebenen Führungsbacken 50 oder Führungselementen für die Einteileinrichtungen 25 geeignet sind. Grundsätzlich besteht ein wichtiger Aspekt der vorliegenden Erfindung darin, dass Teile der Einteilerleiste oder Einteileinrichtungen einen Teil des Antriebs bilden.

Durch die jeweils mit den Führungsbacken 50 zusammenwirkenden Linearantriebselemente der Bewegungsbahnen 26 können die Führungsbacken 50 aneinander gezogen (Fig. 5) oder voneinander distanziert werden (Fig. 6), wodurch gleichzeitig der untere Balken 44 mit den darauf verankerten Einteilfingern 28 gesenkt (Fig. 5) oder gehoben wird (Fig. 6). An den zueinander weisenden vertikalen Rückseiten der Führungsbacken 50 sind jeweils an gemeinsamen Achsen zwei Arme 52 und 54 gleicher Länge gelenkig gelagert, deren anderes Ende jeweils in einer gemeinsamen Lagerung den unteren Balken 44 und einen oberen Balken 56 führt. Somit umfasst jedes der beiden miteinander gekoppelten Antriebselemente 46 und 48 einen linken und einen rechten oberen Arm 52 sowie einen linken und rechten unteren Arm 54, die durch ihre Anordnung und Verbindungsstellen sowie aufgrund derselben Länge aller Arme 52 und 54 eine Parallelogrammführung für die oberen und unteren Balken 56 und 44 bilden, die eine vertikale Bewegung der Einteilfinger 28 ermöglicht. Während der untere Balken 44 direkten Einfluss auf die Vertikalbewegung der Einteilfinger 28 hat, dient der obere Balken 56 zur exakten Führung der Einteilfinger 28 mittels entsprechend dimensionierter und platzierter Führungslöcher 58 sowie zur Bildung der exakt arbeitenden Parallelogramm-Kinematik.

Die zur Abtrennung der Gruppen 22 von Behältern 14 erforderliche Vertikalbewegung der Einteilerfinger 28 kann somit in vorteilhafter Weise dadurch realisiert werden, dass der untere Einteilfingerbälken 44 durch die beschriebene Parallelogramm-Kinematik, über welche die beiden in ihrem Abstand zueinander verstellbaren Magnetantriebe der vorderen und hinteren Antriebselemente 46 und 48 aufeinander zu oder voneinander weg bewegt werden, in vertikaler Richtung bewegt wird. Wie die Fig. 2 verdeutlicht, weist jede Einteileinrichtung 25 einen solchen Parallelogramm-Mechanismus zur Höhenverstellung der Einteilfinger 28 auf. Die im Abschnitt A (vgl. Fig. 3) der Bewegungsbahn 26 befindliche Einteileinrichtung 25 befindet sich in einem Betriebsmodus, bei dem die beiden gekoppelten Antriebselemente 46 und 48 in ihrer maximalen Distanz voneinander in Transportrichtung TR bewegt werden, jedoch etwas langsamer als der geschlossene Förderstrom 18 mit den Behältern 14, deren vorderste Reihe 30 an den nach oben gefahrenen Einteilfingern 28 anliegt, wodurch der gesamte Förderstrom 18 leicht gegenüber den Behältertransportspuren 45 und damit auch gegenüber der vorauseilenden Gruppe 22 von Behältern 14 verzögert wird. Die bereits im sich an den Sektor A anschließenden Sektor B befindliche vorauseilende Einteileinrichtung 25 kann gegenüber der im Sektor A im Eingriff mit dem Förderstrom 18 befindlichen Einteileinrichtung 25 leicht beschleunigt werden, wobei gleichzeitig die beiden Antriebselemente 46 und 48 aneinander bewegt werden, um ihren Abstand voneinander zu minimieren, wodurch gleichzeitig die oberen und unteren Arme 52 und 54 der Parallelogramm-Kinematik nach oben bzw. nach unten geschwenkt werden, so dass der untere Balken 44 mit den daran verankerten Einteilfingern 28 nach unten und der obere Balken 56 nach oben bewegt werden. Die Einteilfinger 28 werden dadurch unterhalb des Niveaus der Behältertransportspuren 45 abgesenkt, so dass im Sektor B der Bewegungsbahn 26 keine Kollision mit den Behältern 14 der vorauseilenden Gruppe 22 droht (vgl. Fig. 2).

Da die Magnetantriebe unabhängig voneinander auf der Antriebsbahn bewegt werden können, kann durch Veränderung des Abstandes in Laufrichtung der beiden Magnetantriebe über die erfindungsgemäße Parallelogramm-Kinematik eine Vertikalbewegung der Einteilfinger 28 definierter Höhe erzeugt werden. Um diese Vertikalbewegung zu erreichen, weist der Parallelogramm-Mechanismus die beiden in ihrem Abstand veränderlichen Koppel- bzw. Antriebselemente 46 und 48 auf. Zum Heben der Finger 28 werden die beiden Elemente 46, 48 um einen definierten Weg auseinander gefahren; zum Absenken der Finger 28 werden sie aneinander gefahren, was mittels der exakt steuerbaren Magnetantriebe problemlos mit sehr hoher Bewegungsgeschwindigkeit realisierbar ist. Die gemäß Fig. 2 im dritten Sektor C befindliche Einteileinrichtung 25 eilt entgegen der Transportrichtung TR mit ggf. deutlich höherer Rücklaufgeschwindigkeit zurück, um wieder in den Sektor A bewegt zu werden, wo die beiden Antriebselemente 46 und 48 zum Zwecke des Anhebens der Einteilfinger 28 wieder auseinander bewegt werden.

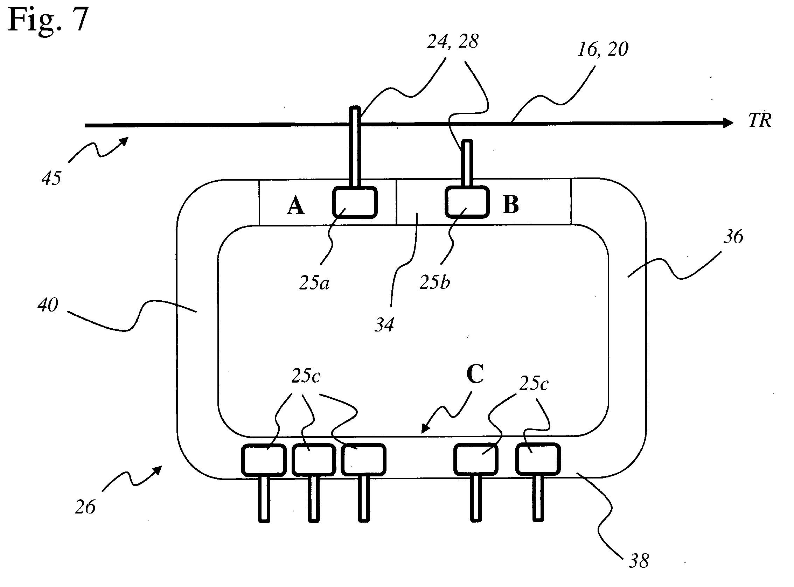

Die schematische Seitenansicht der Fig. 7 verdeutlicht anhand der Sektoren A, B und C der Bewegungsbahn 26 entsprechend Fig. 4 eine Variante der erfindungsgemäßen Vorrichtung 10 zum Gruppieren von Stückgut 12 bzw. von Behältern, die in Transportrichtung TR mittels der Transportvorrichtung 16 auf der Transportstrecke 20 befördert werden. Die hier nicht dargestellten Behälter 14 werden bspw. gemäß Fig. 3 in mehreren nebeneinander angeordneten Behältertransportspuren 45 transportiert. Die normalerweise mittels sog. Gassenbleche voneinander separierten Transportspuren 45 verlaufen parallel und ermöglichen einen störungsfreien Transport einer bestimmten Behältergröße, die durch den Behälterdurchmesser definiert ist. Sollen mit der Transportvorrichtung 10 Behälter anderer Größe und abweichenden Durchmessers transportiert werden, so müssen die Behältertransportspuren 45 in ihren Abständen zueinander verändert und justiert werden. Eine solche Anpassung kann durch manuellen Umbau der Transportvorrichtung 10 erfolgen, was einen erheblichen Zeitaufwand bedingt. Besonders vorteilhaft ist jedoch eine teil- oder vollautomatische Anpassung der Abstände der Transportspuren 45, bspw. durch eine motorische Verstellung der Transportspuren 45 mittels Spindelantrieben oder anderer Stellelemente, wodurch ein Produktwechsel erheblich erleichtert werden kann.

Entsprechend der Darstellungen der Figuren 1 und 2 besteht jedoch bei einer solchen Breiten- und Abstandsjustierung der Behältertransportspuren 45 die Gefahr einer Kollision der Einteilerelemente 24 bzw. der Einteilfinger 28 mit den Förderelementen der Transportvorrichtung, da die Einteilfinger 28 unter Umständen nicht völlig aus dem Eingriffsbereich mit der Transportstrecke 20 gebracht werden können. Diese Situation ist in Fig. 7 durch die im Sektor A der Bewegungsbahn 26 befindliche erste Einteileinrichtung 25a mit den entsprechend Fig. 6 vertikal nach oben ausgefahrenen Einteilfingern 28 angedeutet. Die rechts davon im Sektor B befindliche zweite Einteileinrichtung 25b behebt das Kollisionsproblem dadurch, dass dort die Einteilerelemente 24 bzw. Einteilfinger 28 soweit abgesenkt sind, dass sie vollständig aus dem räumlichen Bereich der Transportstrecke 20 und der Behältertransportspuren 45 der Transportstrecke 20 gebracht sind. In einer solchen Lage mit abgesenkten Einteilfingern 28 der Einteileinrichtungen 25b können die Transportgassenbreiten problemlos verstellt werden, insbesondere mit einer teil- oder vollautomatischen Verstellung der Transportspuren 45. Wenn hierbei die Möglichkeit besteht, die Einteilerelemente 24 bzw. Einteilfinger 28 zumindest temporär vollständig unter das Höhenniveau der Transportstrecke 20 abzusenken, besteht keine Kollisionsgefahr der Einteilerelemente 24 mit den in ihrer Position verstellbaren Behältertransportspuren 45.

In der Darstellung der Fig. 7 findet sich eine weitere Variante, welche die Verstellung der Transportspuren 45 in der erwähnten Weise ermöglicht. So können die mit der Bezugsziffer 25c bezeichneten Einteileinrichtungen zumindest temporär während des Stellvorgangs in den unteren Sektor C der Bewegungsbahn 26 gebracht und dort gesammelt und aufgestaut werden. Dieser Parksektor C für die Einteileinrichtungen 25c bringt deren Einteilfinger 28 zuverlässig aus dem Kollisionsbereich mit der Transportstecke 20, so dass die Breitenjustierung der Transportspuren 45 in keiner Weise behindert wird. Bei einer entsprechenden Positionierung der Einteilerelemente 25c können die Behältertransportspuren 45 und ggf. die dazwischen angeordneten trennenden Gassenbleche in ihren Abständen zueinander auf unterschiedlich dimensionierte Behälter 14 oder Stückgüter 12 eingestellt werden. Aufgrund der aus dem Kollisionsbereich gebrachten Einteileinrichtungen 25c kann auch diese Verstellung in vorteilhafter Weise teil- oder vollautomatisch gesteuert werden.

Da bei einer solchen Breiten- und Abstandsjustierung der Behältertransportspuren 45 auch die Abstände der Einteilerelemente 24 bzw. der Einteilfinger voneinander in geeigneter Weise verstellt werden müssen, kann vorgesehen sein, dass die Einteileinrichtungen 25a, 25b, 25c für eine entsprechende Verstellbarkeit vorbereitet sind. Auch diese Verstellbarkeit kann teil- oder vollautomatisch, vorzugsweise in Koppelung mit der Transportspurverstellung gekoppelt erfolgen. Wahlweise können die Einteileinrichtungen 25 mit Spindelverstellungen, mit einem Scherenmechanismus oder einem anderen geeigneten Verstellmechanismus ausgestattet sein. In einer einfachen Ausführungsvariante kann jedoch auch eine manuelle Verstellung der Einteilerelemente 24 bzw. Einteilfinger 28 vorgesehen sein, bspw. eine Fixierungsmöglichkeit der Einteilfinger 28 in verschiedenen vorgegebenen Einbaupositionen der oberen und unteren Balken 56 und 44 (vgl. Figuren 5 und 6).

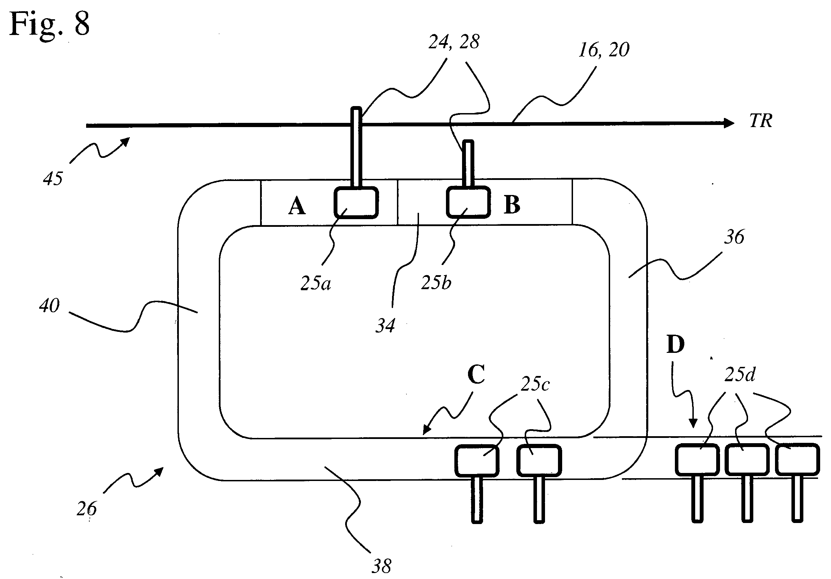

Die schematische Seitenansicht der Fig. 8 verdeutlicht anhand der Sektoren A, B, C und D der Bewegungsbahn 26 entsprechend Fig. 7 eine weitere Variante der erfindungsgemäßen Vorrichtung 10 zum Gruppieren von Stückgut 12 bzw. von Behältern, die in Transportrichtung TR mittels der Transportvorrichtung 16 auf der Transportstrecke 20 befördert werden. In der Darstellung der Fig. 8 findet sich eine weitere Variante, welche die Verstellung der Transportspuren 45 in der oben anhand der Fig. 7 bereits erläuterten Weise ermöglicht. So können die mit der Bezugsziffer 25c bezeichneten Einteileinrichtungen 25 wahlweise temporär während des Stellvorgangs in den unteren Sektor C der Bewegungsbahn 26 gebracht und dort gesammelt und aufgestaut werden. Wahlweise können die mit der Bezugsziffer 25d bezeichneten Einteileinrichtungen 25 in einen unteren Zweigsektor D der Bewegungsbahn 26 gebracht und dort gesammelt und aufgestaut werden. In diesem Zweigsektor D können einzelne oder mehrere Einteileinrichtungen 25d "geparkt" und bei Bedarf der Bewegungsbahn (A, B, C) zugeführt werden. Das Abstellen der Einteileinrichtungen 25d im Sektor D ist problemlos mit Hilfe der getriebelosen Direktantriebe der Einteileinrichtungen 25 möglich, da diese bei Bedarf in umgekehrter Antriebsrichtung in den Sektor D befördert werden oder in normaler Antriebsrichtung wieder aus dem Sektor D herausgefahren werden können. So bringt nicht nur der Parksektor C für die Einteileinrichtungen 25c, sondern bei Bedarf bzw. wahlweise der Parksektor D für die Einteileinrichtungen 25d deren jeweilige Einteilfinger 28 zuverlässig aus dem Kollisionsbereich mit der Transportstecke 20, so dass bspw. eine Breitenjustierung der Transportspuren 45 ermöglicht ist, wie dies bereits anhand der Fig. 7 beschrieben wurde.

Der optionale Parksektor D kann somit bspw. genutzt werden, um die Einteileinrichtungen 25 an unterschiedliche Einstellungen der Transportstrecke 20 anzupassen. Ebenso möglich ist jedoch eine Zwischenspeicherung von nicht benötigten Einteileinrichtungen 25d, da bspw. im gesamten Einteilprozess aufgrund relativ großer Artikelgruppen 22 und entsprechend geringer Anzahl von Lücken 32 entlang der relevanten Transportstrecke TR nur wenige Einteileinrichtungen 25 benötigt werden. Bei anderen Prozessparametern mit z.B. kürzeren Gruppen 22 und entsprechend größerer Anzahl von Lücken 32 können zusätzliche Einteileinrichtungen 25d aus dem Sektor D entnommen und der Bewegungsbahn 26 zugeführt werden. Die getriebelosen Direktantriebe der Einteileinrichtungen 25 ermöglichen eine solche Variation der jeweils eingesetzten Einteileinrichtungen 25.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Vorrichtung; Vorrichtung zum Gruppieren von Stückgut
- 12: Stückgut
- 14: Behälter
- 16: Transportvorrichtung
- 18: geschlossener Förderstrom
- 20: Transportstrecke
- 22: Gruppe
- 24: Einteilerelement
- 25: Einteileinrichtung
- 25a: erste Einteileinrichtung (Sektor A)
- 25b: zweite Einteileinrichtung (Sektor B)
- 25c: dritte Einteileinrichtung (Sektor C)
- 25d: Vierte Einteileinrichtung (Sektor D)
- 26: Bewegungsbahn
- 28: Einteilfinger
- 30: vorderste Reihe
- 32: Lücke
- 34: oberer Abschnitt
- 36: vorderer Bogen
- 38: unterer Abschnitt
- 40: hinterer Bogen
- 42: Magnetantrieb
- 44: unterer Balken
- 45: Behältertransportspur
- 46: vorderes Antriebselement
- 48: hinteres Antriebselement
- 50: Führungsbacke
- 52: oberer Arm
- 54: unterer Arm
- 56: oberer Balken
- 58: Führungsloch

- A: erster Sektor
- B: zweiter Sektor
- C: dritter Sektor
- D: Vierter Sektor
- TR: Transportrichtung

## Patentansprüche

1. Vorrichtung (10) zum Gruppieren von Stückgut (12), das mittels einer Transportvorrichtung (16) in einem im Wesentlichen geschlossenen Förderstrom (18) über eine Transportstrecke (20) befördert wird, mit beweglichen und quer zur Transportrichtung (TR) in den Förderstrom (18) eingreifenden Einteilerelementen (24) zur Ausbildung von Lücken (32) zwischen aufeinander folgend transportierten Stückgütern (12), wobei die Einteilerelemente (24) jeweils durch Einteilfinger (28) gebildet sind, die annähernd senkrecht und entlang ihrer Längserstreckungsrichtungen in den Förderstrom (18) einbringbar und aus dem Förderstrom (18) bringbar sind, wobei einzelne oder mehrere Einteilerelemente (24) jeweils separaten Einteileinrichtungen (25) zugeordnet sind, die über getriebelose Direktantriebe entlang einer geschlossenen, zumindest abschnittsweise parallel zur Transportstrecke (20) verlaufenden Bewegungsbahn (26) umlaufen, wobei die Vorschubbewegungen und/oder - geschwindigkeiten der einzelnen Einteileinrichtungen (25) mit den diesen jeweils zugeordneten Einteilererelementen (24) entlang der Bewegungsbahn (26) variabel und/oder individuell steuerbar sind, wobei die Bewegungsbahnen (26) der Einteileinrichtungen (25) jeweils mit magnetischen oder elektromagnetischen Antrieben (42) versehen sind, **dadurch gekennzeichnet, dass** jeder Einteileinrichtung (25) jeweils wenigstens zwei Antriebselemente (46, 48) zugeordnet sind, die gemeinsam entlang der Bewegungsbahn (26) bewegbar sind, wobei die wenigstens zwei Antriebselemente (46, 48) jeder Einteileinrichtung (25) in ihrem Abstand zueinander jeweils veränderlich sind und wobei der Vertikalhub der Einteilfinger (28) flexibel steuerbar ist, indem die Abstände der jeweiligen Antriebspaare mit ihren Magnetantrieben gesteuert werden.

2. Vorrichtung nach Anspruch 1, bei der die Einteilerelemente (24) bzw. Einteilfinger (28) zumindest temporär vollständig unter ein Höhenniveau der Transportstrecke (20) absenkbar sind.

3. Vorrichtung nach Anspruch 1, bei der die Bewegungsbahnen (26) jeweils als Langstatoren von Linearmotorabschnitten ausgebildet sind.

4. Vorrichtung nach einem der Ansprüche 1 bis 3, bei dem zumindest Teile der Einteileinrichtungen (25) die Antriebe selbst bilden.

5. Vorrichtung nach einem der Ansprüche 1 bis 4, bei der zumindest an einer Längsseite der Transportstrecke (20) eine einseitig angeordnete Bewegungsbahn (26) als Antrieb angeordnet ist.

6. Vorrichtung nach einem der Ansprüche 1 bis 5, bei der an beiden Längsseiten der Transportstrecke (20) jeweils symmetrisch angeordnete Bewegungsbahnen (26) als Antrieb angeordnet sind.

7. Vorrichtung nach Anspruch 6, bei der die beidseitig der Transportstrecke (20) angeordneten Bewegungsbahnen (26) jeweils als unabhängig voneinander steuerbare Antriebe für die Einteileinrichtungen (25) ausgebildet sind.

8. Vorrichtung nach Anspruch 6 oder 7, bei der die wenigstens zwei Antriebselemente (46, 48) einer Einteileinrichtung (25) über einen Parallelogramm-Mechanismus zur Höhenverstellung und/oder zur Bewegung der Einteilfinger (28) senkrecht zur Bewegungsrichtung entlang der Bewegungsbahn (26) miteinander gekoppelt sind.

9. Verfahren zum Gruppieren von Stückgut (12), das mittels einer Transportvorrichtung (16) in einem im Wesentlichen geschlossenen Förderstrom (18) über eine Transportstrecke (20) befördert wird, mittels beweglicher und quer zur Transportrichtung (TR) in den Förderstrom (18) eingreifender Einteilerelemente (24) zur Ausbildung von Lücken (32) zwischen aufeinander folgend transportierten Stückgütern (12), wobei die Einteilerelemente (24) jeweils durch Einteilfinger (28) gebildet sind, die annähernd senkrecht und entlang ihrer Längserstreckungsrichtungen in den Förderstrom (18) einbringbar und aus dem Förderstrom (18) bringbar sind, wobei einzelne oder mehrere Einteilerelemente (24) jeweils separaten Einteileinrichtungen (25) zugeordnet sind, die über getriebelose Direktantriebe jeweils unabhängig voneinander und/oder in jeweils unterschiedlichen Vorschubgeschwindigkeiten entlang einer geschlossenen, zumindest abschnittsweise parallel zur Transportstrecke (20) verlaufenden Bewegungsbahn (26) umlaufen, und wobei die Vorschubbewegungen und/oder -geschwindigkeiten der einzelnen Einteileinrichtungen (25) mit den diesen jeweils zugeordneten Einteilererelementen (24) entlang der Bewegungsbahn (26) variabel und/oder individuell gesteuert werden, wobei die Bewegungsbahnen (26) der Einteileinrichtungen (25) jeweils mit magnetischen oder elektromagnetischen Antrieben (42) versehen sind, **dadurch gekennzeichnet, dass** jeder Einteileinrichtung (25) jeweils wenigstens zwei Antriebselemente (46, 48) zugeordnet sind, die gemeinsam entlang der Bewegungsbahn (26) bewegbar sind, wobei die wenigstens zwei Antriebselemente (46, 48) jeder Einteileinrichtung (25) in ihrem Abstand zueinander jeweils veränderlich sind und wobei der Vertikalhub der Einteilfinger (28) flexibel steuerbar ist, indem die Abstände der jeweiligen Antriebspaare mit ihren Magnetantrieben gesteuert werden.

10. Verfahren nach Anspruch 9, bei dem die beidseitig der Transportstrecke (20) angeordneten Bewegungsbahnen (26) Teile jeweils unabhängig voneinander steuerbarer Antriebe (42) für Einteileinrichtung (25) bilden, denen jeweils die Einteilerelemente (24) zugeordnet sind, wobei mehrere Einteilfinger (28) jeweils einer gemeinsamen Einteileinrichtung (25) zugeordnet sind.

11. Verfahren nach Anspruch 9 oder 10, wobei die wenigstens zwei Antriebselemente (46, 48) über einen Parallelogramm-Mechanismus zur Höhenverstellung und/oder zur Bewegung der Einteilerelemente (24) bzw. der Einteilfinger (28) senkrecht zur Bewegungsrichtung entlang der Bewegungsbahn (26) miteinander gekoppelt sind.

## Claims

1. A device (10) for grouping piece goods (12), which are being conveyed in an essentially closed conveyor stream (18) along a transport route (20) by means of a transport device (16), said device (10) having divider elements (24), which are movable and which insert into the conveyor stream (18) transversal to the direction of transport (TR) for the purpose of forming gaps (32) between consecutive piece goods (12) being transported, wherein the divider elements (24) are respectively formed by divider fingers (28), which are insertable into and bringable out of the conveyor stream (18) approximately perpendicularly and along their longitudinal extension directions, wherein individual or a plurality of divider elements (24) are assigned to respectively separate divider apparatuses (25), which circulate via gearless direct drives along a closed movement path (26) running at least section-wise in parallel to the transport route (20), wherein the feed motions and/or feed speeds of the individual divider apparatuses (25) with the divider elements (24) respectively assigned to them are variably and/or individually controllable along the movement path (26), wherein the movement paths (26) of the divider apparatuses (25) are respectively provided with magnetic or electromagnetic drives (42), **characterised in that** each divider apparatus (25) is assigned at least two drive elements (46, 48), respectively, which drive elements (46, 48) are movable together along the movement path (26), wherein the at least two drive elements (46, 48) of each divider apparatus (25) are individually changeable in their distance in relation to each other, and wherein the vertical stroke of the divider fingers (28) is flexibly controllable by the distances of the respective drive pairs being controlled with their magnetic drives.

2. The device as recited in claim 1, in which the divider elements (24) or divider fingers (28), as the case may be, are at least temporarily lowerable completely below a height level of the transport route (20).

3. The device as recited in claim 1, in which the movement paths (26) are each formed as long stators of linear motor sections.

4. The device as recited in one of the claims 1 to 3, in which at least parts of the divider apparatuses (25) form the drives as such.

5. The device as recited in one of the claims 1 to 4, in which a one-sidedly arranged movement path (26) is arranged as a drive at least at one longitudinal side of the transport route (20).

6. The device as recited in one of the claims 1 to 5, in which in each case symmetrically arranged movement paths (26) are arranged as drives at both longitudinal sides of the transport route (20).

7. The device as recited in claim 6, in which the movement paths (26) arranged on both sides of the transport route (20) are respectively designed as drives for the divider apparatuses (25), which drives are controllable independently of each other.

8. The device as recited in claim 6 or 7, in which the at least two drive elements (46, 48) of a divider apparatus (25) are coupled with each other via a parallelogram mechanism for the purpose of height adjustment and/or for moving the divider fingers (28) vertically to the direction of movement along the movement path (26).

9. A method for grouping piece goods (12), which are being conveyed in an essentially closed conveyor stream (18) along a transport route (20) by a transport device (16), by means of divider elements (24), which are movable and which insert into the conveyor stream (18) transversal to the direction of transport (TR) for the purpose of forming gaps (32) between consecutive piece goods (12) being transported, wherein the divider elements (24) are respectively formed by divider fingers (28), which are insertable into and bringable out of the conveyor stream (18) approximately perpendicularly and along their longitudinal extension directions, wherein individual or a plurality of divider elements (24) are assigned to respectively separate divider apparatuses (25), which circulate via gearless direct drives respectively independently of each other and/or at respectively different feed speeds along a closed movement path (26) running at least section-wise in parallel to the transport route (20), and wherein the feed motions and/or feed speeds of the individual divider apparatuses (25) with the divider elements (24) respectively assigned to them are variably and/or individually controlled along the movement path (26), wherein the movement paths (26) of the divider apparatuses (25) are respectively provided with magnetic or electromagnetic drives (42), **characterised in that** each divider apparatus (25) is assigned at least two drive elements (46, 48), respectively, which drive elements (46, 48) are movable together along the movement path (26), wherein the at least two drive elements (46, 48) of each divider apparatus (25) are individually changeable in their distance in relation to each other, and wherein the vertical stroke of the divider fingers (28) is flexibly controllable by the distances of the respective drive pairs being controlled with their magnetic drives.

10. The method as recited in claim 9, in which the movement paths (26) arranged on both sides of the transport route (20) form parts of drives (42) for the divider apparatus (25), which drives (42) are controllable respectively independently of each other, and which are each assigned the divider elements (24), wherein a plurality of divider fingers (28) are respectively assigned to a common divider apparatus (25).

11. The method as recited in claim 9 or 10, wherein the at least two drive elements (46, 48) are coupled with each other via a parallelogram mechanism for the purpose of height adjustment and/or for moving the divider elements (24) or the divider fingers (28), respectively, vertically to the direction of movement along the movement path (26).

## Revendications

1. Dispositif (10) de groupement de produits isolés (12) qui sont transportés au moyen d'un dispositif de transport (16), dans un flux de transport (18) pour l'essentiel fermé, sur une section de transport (20), comprenant des éléments diviseurs (24) déplaçables et s'engageant dans le flux de transport (18) transversalement à la direction de transport (TR) et destinés à former des lacunes (32) entre des produits isolés (12) transportés les uns après les autres, lesdits éléments diviseurs (24) étant formés chacun par des doigts diviseurs (28) qui peuvent être introduits dans le flux de transport (18) et retirés du flux de transport (18) d'une manière approximativement perpendiculaire et suivant leurs directions d'extension longitudinale, des éléments diviseurs (24) individuels ou plusieurs éléments diviseurs étant associés respectivement à des dispositifs diviseurs (25) séparés qui tournent, par l'intermédiaire d'entraînements directs, le long d'une trajectoire de mouvement (26) fermée s'étendant au moins par sections parallèlement à la section de transport (20), les mouvements et/ou vitesses d'avance des dispositifs diviseurs (25) individuels avec les éléments diviseurs (24) associés respectivement à ceux-ci pouvant être commandés de manière variable et/ou individuelle le long de la trajectoire de mouvement (26), les trajectoires de mouvement (26) des dispositifs diviseurs (25) étant pourvues chacune de mécanismes d'entraînement (42) magnétiques ou électromagnétiques, **caractérisé par le fait qu'**à chaque dispositif diviseur (25) sont associés respectivement au moins deux éléments d'entraînement (46, 48) qui peuvent être déplacés en commun le long de la trajectoire de mouvement (26), lesdits au moins deux éléments d'entraînement (46, 48) de chaque dispositif diviseur (25) pouvant être modifiés respectivement quant à leur distance l'un par rapport à l'autre, et la course verticale des doigts diviseurs (28) pouvant être commandée de manière flexible en commandant les distances des paires d'entraînement respectives avec leurs mécanismes d'entraînement magnétiques.

2. Dispositif selon la revendication 1, dans lequel les éléments diviseurs (24) ou bien les doigts diviseurs (28) peuvent être abaissés, au moins temporairement, complètement en dessous d'un niveau de hauteur de la section de transport (20).

3. Dispositif selon la revendication 1, dans lequel les trajectoires de mouvement (26) sont réalisées chacune en tant que stators déployés de sections de moteur linéaire.

4. Dispositif selon l'une quelconque des revendications 1 à 3, dans lequel au moins des parties des dispositifs diviseurs (25) forment les mécanismes d'entraînement mêmes.

5. Dispositif selon l'une quelconque des revendications 1 à 4, dans lequel, au moins sur un grand côté de la section de transport (20), une trajectoire de mouvement (26) disposée sur un côté est disposée en tant que mécanisme d'entraînement.

6. Dispositif selon l'une quelconque des revendications 1 à 5, dans lequel, sur les deux grands côtés de la section de transport (20), des trajectoires de mouvement (26) disposées respectivement de manière symétrique sont disposées en tant que mécanisme d'entraînement.

7. Dispositif selon la revendication 6, dans lequel les trajectoires de mouvement (26) disposées de part et d'autre de la section de transport (20) sont réalisées chacune en tant que mécanismes d'entraînement pour les dispositifs diviseurs (25), aptes à être commandés indépendamment les uns des autres.

8. Dispositif selon la revendication 6 ou 7, dans lequel lesdits au moins deux éléments d'entraînement (46, 48) d'un dispositif diviseur (25) sont couplés entre eux, le long de la trajectoire de mouvement (26), par un mécanisme à parallélogramme pour le réglage en hauteur et/ou le déplacement des doigts diviseurs (28) perpendiculaire à la direction de mouvement.

9. Procédé de groupement de produits isolés (12) - qui sont transportés au moyen d'un dispositif de transport (16), dans un flux de transport (18) pour l'essentiel fermé, sur une section de transport (20) - par l'intermédiaire d'éléments diviseurs (24) déplaçables et s'engageant dans le flux de transport (18) transversalement à la direction de transport (TR) et destinés à former des lacunes (32) entre des produits isolés (12) transportés les uns après les autres, lesdits éléments diviseurs (24) étant formés chacun par des doigts diviseurs (28) qui peuvent être introduits dans le flux de transport (18) et retirés du flux de transport (18) d'une manière approximativement perpendiculaire et suivant leurs directions d'extension longitudinale, des éléments diviseurs (24) individuels ou plusieurs éléments diviseurs étant associés respectivement à des dispositifs diviseurs (25) séparés qui tournent, par l'intermédiaire d'entraînements directs, respectivement indépendamment les uns des autres et/ou à des vitesses d'avance respectivement différentes, le long d'une trajectoire de mouvement (26) fermée s'étendant au moins par sections parallèlement à la section de transport (20), et les mouvements et/ou vitesses d'avance des dispositifs diviseurs (25) individuels avec les éléments diviseurs (24) associés respectivement à ceux-ci étant commandés de manière variable et/ou individuelle le long de la trajectoire de mouvement (26), les trajectoires de mouvement (26) des dispositifs diviseurs (25) étant pourvues chacune de mécanismes d'entraînement (42) magnétiques ou électromagnétiques, **caractérisé par le fait qu'**à chaque dispositif diviseur (25) sont associés respectivement au moins deux éléments d'entraînement (46, 48) qui peuvent être déplacés en commun le long de la trajectoire de mouvement (26), lesdits au moins deux éléments d'entraînement (46, 48) de chaque dispositif diviseur (25) pouvant être modifiés respectivement quant à leur distance l'un par rapport à l'autre, et la course verticale des doigts diviseurs (28) pouvant être commandée de manière flexible en commandant les distances des paires d'entraînement respectives avec leurs mécanismes d'entraînement magnétiques.

10. Procédé selon la revendication 9, dans lequel les trajectoires de mouvement (26) disposées de part et d'autre de la section de transport (20) forment des mécanismes d'entraînement (42) pour dispositif diviseur (25) qui sont aptes à être commandés respectivement indépendamment les uns des autres et auxquels sont associés respectivement les éléments diviseurs (24), plusieurs doigts diviseurs (28) étant associés respectivement à un dispositif diviseur (25) commun.

11. Procédé selon la revendication 9 ou 10, dans lequel lesdits au moins deux éléments d'entraînement (46, 48) sont couplés entre eux, le long de la trajectoire de mouvement (26), par un mécanisme à parallélogramme pour le réglage en hauteur et/ou le déplacement des éléments diviseurs (24) ou bien des doigts diviseurs (28) perpendiculaire à la direction de mouvement.
